Europäisches Patentamt

European Patent Office

Office européen des brevets

(11) Veröffentlichungsnummer: **0 565 980 A1**

# EUROPÄISCHE PATENTANMELDUNG

(21) Anmeldenummer: **93105563.6**

(51) Int. Cl.5: **B29C 59/10**

(22) Anmeldetag: **03.04.93**

(30) Priorität: **15.04.92 DE 4212549**

(43) Veröffentlichungstag der Anmeldung:
**20.10.93 Patentblatt 93/42**

(84) Benannte Vertragsstaaten:
**BE DE GB NL**

(71) Anmelder: **SOFTAL electronic GmbH**
**Friedrich-Ebert-Damm 202a**
**D-22047 Hamburg(DE)**

(72) Erfinder: **Hassmann, Werner, Dipl.-Ing.**
**Jahnstrasse 19**

**W-4540 Lengerich Westfalen(DE)**
Erfinder: **Prinz, Eckhard, Dipl.-Phys.**
**Dorfstrasse 23**
**W-2071 Hemfelde(DE)**
Erfinder: **Gerstenberg, Klaus W., Dr. rer. nat.**
**Papenmoorweg 2**
**W-2083 Halstenbek(DE)**

(74) Vertreter: **von Raffay, Vincenz, Dipl.-Ing. et al**
**Patentanwälte Raffay & Fleck**
**Postfach 32 32 17**
**D-20117 Hamburg (DE)**

(54) Verfahren und Vorrichtung zur elektrischen Vorbehandlung von gleitmittelhaltigen Kunststoff-Folien, insbesondere aus Polypropylen oder Polyethylen.

(57) Das Verfahren und die Vorrichtung zur elektrischen Vorbehandlung von gleitmittelhaltigen Kunststoff-Folien zur Erhöhung der Oberflächenspannung durch Korona-Entladung weist eine herkömmliche Elektrodenanordnung auf, die mit einer Düsenanordnung (4) zur Durchführung einer Wärmebehandlung durch kurzzeitiges Anblasen der Folie (3) mit heißem Gas, vorzugsweise Luft, zusammenarbeitet. Die Temperatur des heißen Gases liegt oberhalb des Schmelzpunktes der Folie und oberhalb der Siede- bzw. Zersetzungstemperatur des Gleitmittels. Hierdurch wird die Oberflächenbehandlung im Vergleich zu einer reinen Vorbehandlung mit Hilfe von Koronaentladung sehr viel effektiver. Eine Beeinflussung der Folie selbst findet durch die Kurzzeitigkeit (Thermo-Schock) nicht statt. Die Behandlung wirkt nur an einer Folienseite.

Fig.2

Die Erfindung betrifft ein Verfahren und eine Vorrichtung nach dem Oberbegriff des Patentanspruches 1.

Voraussetzung der Bedruckbarkeit und Klebbarkeit von beliebigen Stoffen ist eine hinreichende Benetzung des Bedruckstoffs durch die Druckfarben, Primer bzw. Kleber. Diese Benetzbarkeit muß häufig erst mit einer geeigneten Vorbehandlung des Bedruckstoffes eingestellt werden. Eine weit verbreitete und allgemein bekannte Vorbehandlungsmethode ist die Oberflächenmodifikation mit einer elektrischen Koronaentladung. Diese Behandlung ist hoch effektiv, exzellent kontrollierbar und die verwendeten Apparaturen sind leicht handhabbar.

Die typische Korona-Behandlungsstation besteht aus einer Walze auf elektrischem Massepotential, welche die vorzubehandelnde Bahn führt, und einem auf hohem elektrischen Potential liegenden Elektrodensystem.

Zwischen Elektrodensystem und Walze finden die elektrischen Überschläge der Koronaentladung statt. Eine dielektrische Beschichtung von Walze oder Elektroden bewirkt eine gleichmäßige Verteilung der Entladungsfunken über die gesamte Länge der Station und verhindert die Ausbildung kräftiger Einzelfunken. Die Elektroden werden mit einem Luftstrom umspült und so gekühlt. Gleichzeitig wird das Ozon, das immer in einer luftbetriebenen Korona entsteht, abgeführt. Die physikalischen und chemischen Effekte innerhalb der Koronaentladung sind recht kompliziert und im einzelnen nicht verstanden. Jedoch sind die Vorbehandlungseffekte durch Variation der Bahngeschwindigkeit und angelegter Leistung leicht kontrollierbar und sehr gut reproduzierbar.

Die Wirkung der Korona-Entladung auf Oberflächen beruht auf der chemischen Reaktionsfähigkeit der Korona-Atmosphäre. Im Entladungsspalt zwischen Elektrode und Trägerwalze werden Elektronen im Feld der angelegten Hochspannung beschleunigt. Bei Stößen der beschleunigten Elektronen mit den Luftmolekülen wird eine unübersehbare Vielzahl von Molekülbruchstücken und neuen Molekülen erzeugt, die zusätzlich ionisiert und elektronisch angeregt sein können. Die mit der Korona aktivierte Luft führt zu einer Oxidation der Oberfläche der Bedruckstoffe bis zu einer Tiefe von nur einigen wenigen Nanometern, so daß auch bei dünnen Folien ausschließlich die Oberflächeneigenschaften modifiziert werden.

Mit zunehmender Oxidation nimmt die Oberflächenenergie und hiermit die Benetzungsfähigkeit des Bedruckstoffs zu. Die gebildeten funktionalen Gruppen sind polar und bilden Haftzentren für aufgetragene Druckfarben, Lacke etc..

Die Intensität der Korona-Behandlung ist proportional der Korona-Dosis D, die auf die Oberfläche des Bedruckstoffs abgesetzt wurde. Die Korona-Dosis ist identisch mit der elektrischen Energiedichte und berechnet sich aus der abgesetzten elektrischen Leistung P, der Breite der Korona-Entladung CB und der Geschwindigkeit v mit der die Bahn durch die Station hindurchgezogen wird.

$$D = P / (CB^*v) \ [Wmin/m^2]$$

Dieses "scale-up"-Gesetz der Korona-Technik besagt, daß bei einer Verdoppelung der Abzugsgeschwindigkeit oder bei einer Verdoppelung der Breite der Station eine gleiche Vorbehandlung erzielt wird, wenn gleichzeitig die abgesetzte elektrische Leistung verdoppelt wird.

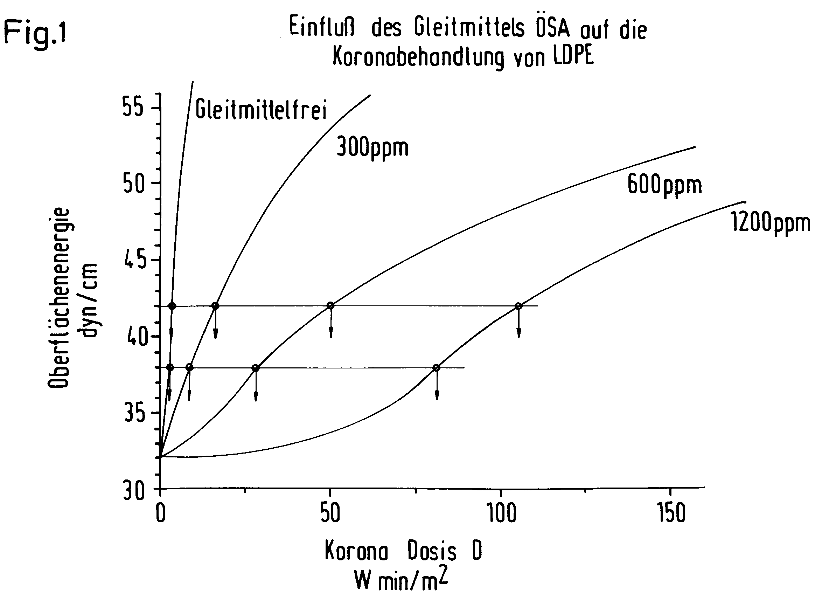

Die Wirkung einer Korona mit der Dosis D auf das zu behandelnde Material hängt sowohl von der chemischen Natur des zu behandelnden Materials als auch ganz entscheidend von der konstruktiven Auslegung der verwendeten Elektroden ab. Gleitmittelhaltige Polypropylen- und Polyethylenfolien gehören zu den schwer behandelbaren Materialien. Fig. 1 zeigt, daß die Behandelbarkeit mit zunehmendem Gleitmittelgehalt abnimmt. Im Beispiel der Fig. 1 werden etwa 16 $Wmin/m^2$ benötigt, um eine PE-Folie mit 300 ppm Gleitmittel auf 42 mN/m zu behandeln. Bei einem Gleitmittelgehalt von 600 ppm steigt die benötigte Korona-Dosis auf 49 und bei 1200 ppm auf 104 $Wmin/m^2$ an. Für gleitmittelfreies Material wird hingegen eine Korona-Dosis von ca. 4 $Wmin/m^2$ eingesetzt. D.h. es müssen für die Behandlung der gleitmittelhaltigen Folien 4-mal, 12-mal bzw. 26-mal so hohe elektrische Leistungen eingesetzt werden wie für die Behandlung der gleitmittelfreien Materialien. Die bekannte Behandlung gleitmittelhaltiger Folien ist vergleichsweise uneffektiv und somit kostenungünstig. Dem stetig größer werdende Kostendruck kann nur mit Elektroden bzw. Vorrichtungen mit hoher Wirksamkeit begegnet werden.

Die Entwicklung hochwirksamer Elektroden führte z.B. zu dem Multimesser-Elektrodensystem (EP-PS 95 051), in dem durch Aufteilung der Korona-Leistung auf 4 bis 11 parallele Elektrodenmesser eine gleichmäßige Korona mit vielen, aber kleinen Funken erhalten wird. Obwohl mit diesem System eine beträchtliche Effektivitätssteigerung erzielt werden konnte, ist eine weitere Steigerung insbesondere bei der Behandlung gleitmittelhaltiger Folie wünschenswert.

Gleitmittel werden den Folien zugesetzt, damit sie die Reibkräfte zwischen der laufenden Bahn und den die Folie berührenden Maschinenteilen reduzieren. Gleitmittelhaltige Folien können mit sehr hohen Geschwindigkeiten verarbeitet werden. Die Gleitmittel setzen sich an den Oberflächen der Folie ab und wirken dort schmierend zwischen Thermoplast und Maschinenteil. Allerdings verschlechtern diese Gleitmittelschichten - sie bestehen z.B. bei Polyethylen- und Polypropylen-Folien aus den primären Fettsäureamiden Erukasäureamid und Ölsäureamid - die Korona-Behandelbarkeit dieser Folien.

Es ist bekannt, daß die Benetzungs- und Haftfähigkeit der oberflächlich anhaftenden Gleitmittel im Prinzip durch eine Temperaturbehandlung der Folie verbessert werden kann. Allerdings konnte bisher nicht verhindert werden, daß gleichzeitig die Volumeneigenschaften des Films verschlechtert werden. Werden die Folien, wie bisher bekannt, mit heißen Walzen oder mit IR-Strahlung erwärmt, so ist die Erwärmung nicht ausschließlich auf die Oberfläche zu beschränken. Die gleichzeitig auftretende Modifikation der Volumeneigenschaften führt i.a. zu einer Verschlechterung der Gebrauchseigenschaften der Folie, z.B. zu einer Verringerung der Zugfestigkeit, so daß die Folienbahn nicht über die Verarbeitungsmaschine mit den gewünschten hohen Geschwindigkeiten geführt werden kann. Auch bei einer Flammenvorbehandlung, die vorwiegend an der Oberfläche wirkt, ist diese negative Nebenwirkung nicht zu beseitigen.

Der Erfindung liegt nun die Aufgabe zugrunde, ein Verfahren und eine Vorrichtung der eingangs genannten Art zu schaffen, durch die die wirtschaftliche Vorbehandlung von gleitmittelhaltigen Kunststoff-Folien möglich ist.

Diese Aufgabe wird durch das Kennzeichen des Anspruches 1 bei einem entsprechenden Verfahren bzw. das Kennzeichen des Anspruches 4 bei einer entsprechenden Vorrichtung, grundsätzlich gelöst.

Es hat sich überraschend herausgestellt, daß durch kurzzeitiges Anblasen der Folienoberfläche mit heißem Gas, vorzugsweise heißer Luft, beispielsweise im Bereich von 600°C, vor der Koronabehandlung oder zusammen mit dieser, die erwünschten Eigenschaften der Oberfläche der Folie stark verbessert werden. Zweckmäßig wird als heißes Gas Luft eingesetzt, obwohl auch andere Gase, beispielsweise Stickstoff, verwendet werden können.

Folgendes Beispiel zeigt die Behandlung verschiedener Folien mit und ohne Gleitmittel.

PE-Folien mit unterschiedlichemd Gleitmittelgehalt:

```
Folien:
Gleitmittelgehalt:      0      300     600     1200          ppm


Oberflächenenergien:
unbehandelt:           31      31      31      31        mN/m
Korona behandelt:      38      38      38      38        mN/m
Thermoschockbehandl.:31        31      31      31        mN/m
Korona + Thermoschock (Heißluft in Korona):
                       42      42      42      42        mN/m
Korona + Thermoschock (Heißluft vor Korona):
                       42      42      41      41        mN/n
Koronabehandlung:
Dosis:                 2,7     9,1     28      82    Wmin/m²
Bahngeschwindigkeit: 50 m/min


Thermoschock:
Lufttemperatur:                        600°C
Luftmenge pro Behandlungslänge:        50 l/min/cm
```

Durch die erfindungsgemäße Vorbehandlung wird auch die Lagerbeständigkeit der behandelten Folie beträchtlich erhöht.

Die positive Wirkung des erfindungsgemäßen Verfahrens, daß auch als "Thermo-Schock" bezeichnet werden kann, beruht nach bisheriger Erkenntnis auf Verdampfen bzw. thermischer Modifikation der Gleitmittel an der Folienoberfläche. Hierzu ist eine Temperatur an der Folienoberfläche notwendig, die deutlich oberhalb der Siedetemperatur bzw. oberhalb der Zersetzungstemperatur des Gleitmittels liegt. Ein typischer Wert für diese Temperatur dürfte bei 300 °C liegen, d.h. die erforderliche Temperatur liegt deutlich über der Schmelztemperatur der Polymerfolie. Mit der nur sehr kurzzeitigen Temperaturbelastung durch das heiße Gas ist es möglich, bei hinreichend kurzer Einwirkzeit die Erwärmung der Folie auf den Oberflächenbereich zu begrenzen, da die schlechte Wärmeleitfähigkeit der Polymere die Wärmeleitung in das Folienvolumen hinein verhindert. Die Wärmeleitung würde weiterhin durch Aufschmelzen des Polymers an der Folienoberfläche verhindert, da hierzu eine große Wärmemenge benötigt wird. Ein begrenztes Aufschmelzen der Folienoberfläche stört die weiteren Verarbeitungsschritte nicht. Mit der geschilderten, auf die Folienoberfläche beschränkten, Erwärmung wird, im Gegensatz zu den bekannten Verfahren, die störende thermische Modifikation des Materials im Folienvolumen vermieden.

Die erfindungsgemäße Vorbehandlung wirkt nur an einer Folienseite. Eine evtl. auftretende Erhöhung der Reibwirkung beschränkt sich also in vorteilhafter Weise auf diese Seite. Allerdings wirkt diese Erhöhung der Reibung nur bis zum nächstfolgenden Bearbeitungsschritt, meist nur über wenige Walzen, so daß ihr keine Bedeutung beizumessen ist.

Im folgenden wird die Erfindung in Verbindung mit zwei Schaubildern und drei Figuren veschiedener Ausführungsbeispiele näher erläutert.

Es zeigt:

Fig. 1    ein Schaubild über die Behandlung von drei gleichen PE-Folien mit verschiedenen Gleitmittelkonzentrationen nach der Korona-Behandlung mit unterschiedlichen Korona-Dosen;

Fig. 2    eine schematische Seitenansicht einer Ausführungsform einer Vorrichtung zur Durchführung des erfindungsgemäßen Verfahrens;

Fig. 3    eine der Fig. 2 entsprechende Seitenansicht, jedoch einer anderen Ausführungsform; und

Fig. 4    eine den Fig. 2 und 3 entsprechende Seitenansicht, jedoch einer weiteren Ausführungsform.

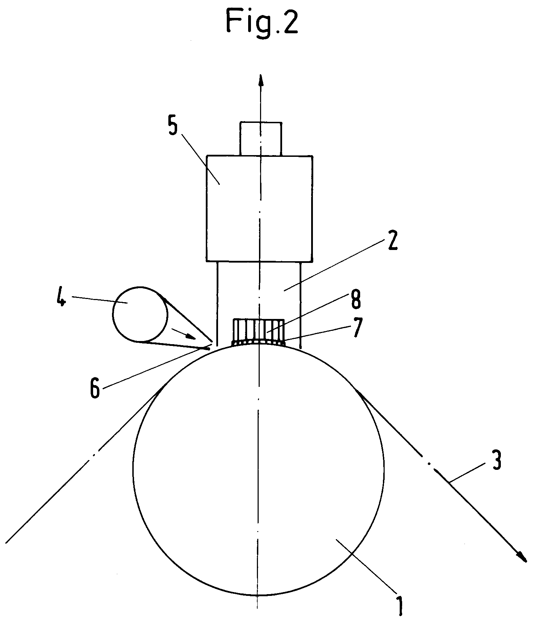

Die in den Fig. 2 bis 4 schematisch im Querschnitt dargestellten Vorrichtungen weisen im wesentlichen gleiche Bauteile auf, die mit gleichen Bezugszeichen bezeichnet sind. Die Folie 3 wird über eine Behandlungswalze geführt, die normalerweise mit einem Dielektrikum beschichtet ist. Auf der der Behandlungswalze 1 gegenüberliegenden Seite befindet sich die Elektrodenanordnung 8, bei der es sich um eine bekannte Messerelektrodenanordnung handelt. Die Koronaentladung ist mit 7 bezeichnet. Die einzelnen Elektroden werden in einem Gehäuse 2 gehalten. Das Ozon wird bei 5 abgesaugt.

Bei der Ausführungsform nach Fig. 2 ist unmittelbar am Eintritt der Folie 3 in die Elektrodenanordnung eine Düsenanordnung 4 vorgesehen. Der aus dieser austretende heiße Gasstrom ist mit 6 bezeichnet. Es ist ohne weiteres erkennbar, daß durch die Düsenanordnung 4 ein Strom oder Strahl heißen Gases ohne Schwierigkeiten auf die Folie am Eintrittsbereich in die Elektrodenanordnung gerichtet werden kann. Die Absaugung erfolgt über die vorhandene Ozonabsaugung 5.

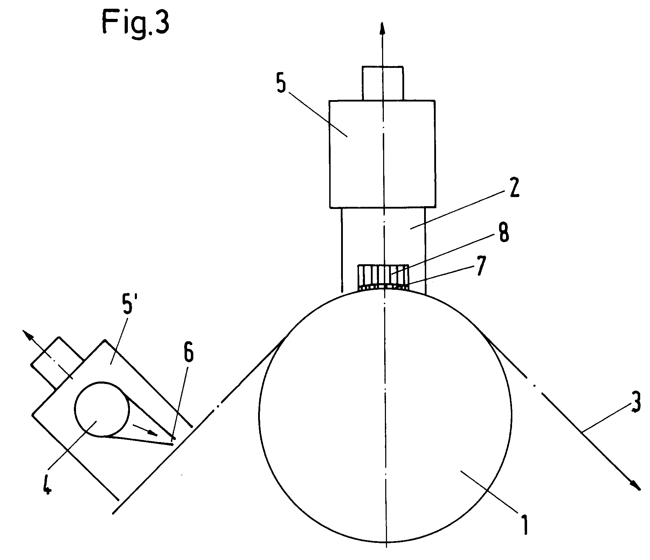

Bei der Ausführungsform nach Fig. 3 ist die Düsenanordnung 4 im Abstand von der Elektrodenanordnung 1,8 vorgesehen. Aus diesem Grunde ist sie auch mit einer eigenen Absaugung 5' ausgerüstet. Diese Ausführungsform wird insbesondere dann eingesetzt, wenn Bahnen unterschiedlicher Breite behandelt werden sollen. Hiermit wird eine Erwärmung der Behandlungswalze neben der Bahn vermieden, falls die Folie nicht die Breite der Station erreicht.

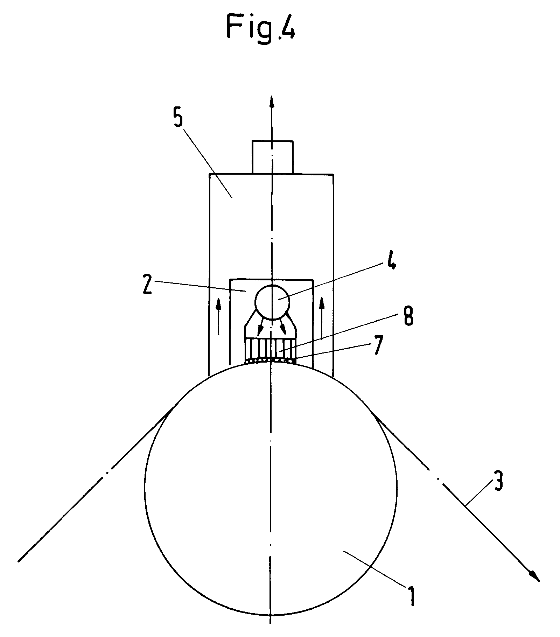

Bei der Ausführungsform nach Fig. 4 ist die Düsenanordnung 4 in den oberhalb der Folie liegenden Teil der Elektrodenanordnung integriert. Die Absaugung erfolgt hier wieder über die bereits vorhandene Ozonabsaugung 5.

Die Düsenanordnung kann durch eine einfache Breitschlitzdüse gebildet sein oder, um die benötigte Gasmenge gering zu halten, aus einem sog. "air knife" bestehen. Zu der Gaszuführung gehört weiterhin ein nicht gezeigter Luftmengenregler sowie ein regelbarer Lufterhitzer. Mit der Wahl von Luftmenge und Lufttemperatur kann die Vorbehandlung (Thermo-Schock) entsprechend Bahngeschwindigkeit und Folienmaterial eingestellt werden. Für Sonderanwendungen können, wie gesagt, auch andere heiße Gase als heiße Luft verwendet werden.

**Patentansprüche**

1.    Verfahren zur elektrischen Vorbehandlung von gleitmittelhaltigen Kunststoff-Folien, insbesondere aus Polypropylen oder Polyethylen, zur Erhöhung der Oberflächenspannung durch Koronaentladung mit Hilfe einer Elektrodenanordnung bei gleichzeitiger Wärmebehandlung der Folie, dadurch gekennzeichnet, daß die Wärmebehandlung durch Anblasen der Folie mit heißem Gas, vorzugsweise Luft, mit einer Temperatur oberhalb des Schmelzpunktes der Folie und oberhalb der Siede- bzw. Zersetzungstemperatur des Gleitmittels erfolgt.

2. Verfahren nach Anspruch 1, dadurch gekennzeichnet, daß das Anblasen mit dem heißen Gas direkt in die Koronaentladung erfolgt.

3. Verfahren nach Anspruch 1, dadurch gekennzeichnet, daß das Anblasen mit heißem Gas in Bewegungsrichtung der Folie vor der Koronaentladung erfolgt.

4. Vorrichtung zur Durchführung des Verfahrens nach Anspruch 1 oder 2, dadurch gekennzeichnet, daß das Anblasen mit heißem Gas durch eine Düsenanordnung (4) erfolgt, die unmittelbar am Eintritt der Folie (3) in die Elektrodenanordnung (1,8) angeordnet ist, und daß die Absaugung über die Ozonabsaugeinrichtung (5) der Elektrodenanordnung erfolgt (Fig. 2).

5. Vorrichtung nach Anspruch 1 oder 2, dadurch gekennzeichnet, daß das Anblasen mit heißem Gas durch eine Düsenanordnung erfolgt, die in die Elektrodenanordnung und die Ozonabsaugung integriert ist (Fig. 4).

6. Vorrichtung nach Anspruch 1 oder 3, dadurch gekennzeichnet, daß das Anblasen mit heißem Gas durch eine Düsenanordnung (4) getrennt von der Elektrodenanordnung (1,8) vor dem Eintritt der Folie in diese erfolgt, und daß eine eigene Absaugeinrichtung (5') für diese Düsenanordnung (4) vorgesehen ist (Fig. 3).

Fig.1

Einfluß des Gleitmittels ÖSA auf die
Koronabehandlung von LDPE

EP 0 565 980 A1

# Fig.2

# Fig.3

# Fig.4

Europäisches
Patentamt

EUROPÄISCHER RECHERCHENBERICHT

Nummer der Anmeldung

EP    93 10 5563
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 704 773 (K. KALWAR) <br> * das ganze Dokument * <br> --- | 1-6 | B29C59/10 |
| X | ADHASION <br> Bd. 35, Nr. 3, März 1991, BERLIN DE <br> Seiten 36 - 40 , XP218639 <br> L. DORN, WIYU WAHONO <br> 'Klebflächenvorbehandlung von EPDM-Gummimischungen' <br> * Seite 39, Spalte 2, Zeile 7 - Seite 40, Spalte 1, Zeile 6; Abbildungen 8-10 * <br> --- | 1,2,5 | |
| P,X | DE-A-4 107 945 (ARCOTEC OBERFLÄCHENTECHNIK) <br> * das ganze Dokument * <br> --- | 1,2,5 | |
| X | KUNSTSTOFFE <br> Bd. 81, Nr. 9, September 1991, MUNCHEN DE <br> Seiten 764 - 767 , XP288896 <br> L. DORN, W. WAHONO 'Vor dem Kleben: umweltfreundlich vorbehandeln' <br> * Seite 766, linke Spalte, Absatz 2 - Seite 767, rechte Spalte, Absatz 2; Abbildungen 7-10 * <br> --- | 1,2,5 | |
| X | DE-B-1 128 644 (KALLE) <br> * Seite 1, linke Spalte, Zeile 42 - Seite 2, rechte Spalte, Zeile 9 * <br> * Seite 2, linke Spalte, Zeile 1 - Seite 2, linke Spalte, Zeile 22; Anspruch 1 * <br> --- | 1,3,4,6 | |
| X | DE-A-1 910 743 (TETRA PAK) <br> * Seite 10, Absatz 4 - Seite 11, Absatz 1; Ansprüche 1,2,4-6 * <br> --- | 1,3,4,6 | |
| X | FR-A-2 116 910 (J. WALTER) <br> * das ganze Dokument * <br> --- | 1 | |

RECHERCHIERTE SACHGEBIETE (Int. Cl.5)

B29C

-/--

Der vorliegende Recherchenbericht wurde für alle Patentansprüche erstellt

| Recherchenort | Abschlußdatum der Recherche | Prüfer |
|---|---|---|
| DEN HAAG | 23 JULI 1993 | LABEEUW R.C.A. |

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 140 665 (MOLECULAR DESIGN INCORPORATED) <br> * Seite 8, Zeile 9 - Seite 9, Zeile 4; Ansprüche 1-20; Abbildungen 9,11,12 * <br> --- | 1,3,6 | |
| A | GB-A-2 200 359 (S. HORN) <br> * Ansprüche 1,3,6 * <br><br> ----- | | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 23 JULI 1993 | LABEEUW R.C.A. |